# EUROPÄISCHE PATENTSCHRIFT

(11) **EP 3 462 069 B1**
(45) Veröffentlichungstag und Bekanntmachung des Hinweises auf die Patenterteilung: **26.05.2021**
(21) Anmeldenummer: 18189555.8
(22) Anmeldetag: 17.08.2018
(51) Int. Cl.: F16L 21/03, F16L 25/00, F16L 49/02, F16L 17/10, F16L 27/10

(54) **KOPPLUNGSELEMENT ZUM DICHTENDEN KOPPELN ZWEIER ANEINANDERGELEGTER ROHRE**
COUPLING ELEMENT FOR SEALED COUPLING OF TWO PIPES LAID TOGETHER
ÉLÉMENT DE COUPLAGE PERMETTANT DE COUPLER DE MANIÈRE ÉTANCHE DEUX TUBES PLACÉS L'UN CONTRE L'AUTRE

(30) Priorität: 18.08.2017 DE 102017214457
(43) Veröffentlichungstag der Anmeldung: 03.04.2019
(73) Patentinhaber: Steinzeug-Keramo GmbH, 50226 Frechen (DE)
(72) Erfinder: Bohle, Ulrich, 50226 Frechen (DE); Flick, Karl-Heinz, 50226 Frechen (DE); Gergert, Arthur, 96114 Hirschaid (DE); Lechner, Michael, 96269 Großheirath (DE); Neumann, Uwe, 55129 Mainz-Hechtsheim (DE); Schäfer, Matthias, 96465 Neustadt/Cbg. (DE)
(74) Vertreter: dompatent von Kreisler Selting Werner - Partnerschaft von Patent- und Rechtsanwälten mbB

(56) Entgegenhaltungen:
- DE-U1- 8 702 997
- DE-U1- 29 806 631
- DE-U1-202012 004 193
- GB-A- 556 010
- GB-A- 993 384
- GB-A- 2 199 913
- US-H- H 814

## Beschreibung

Die Erfindung betrifft ein Kopplungselement zum dichtenden Koppeln zweier aneinandergelegter Rohre.

Aus aneinandergelegten Rohren werden Rohrleitungen gebildet, durch die ein meist fluides Medium über eine räumliche Distanz transportiert wird. Ein Kopplungselement verbindet dabei die stirnseitig aneinandergelegten Enden benachbarter Rohre. Zum einen soll das Kopplungselement eine stabile Verbindung schaffen. Zum anderen soll die Verbindung abgedichtet werden, um zu verhindern, dass das zu transportierende Medium zwischen den beiden Rohrenden austritt. Dies ist insbesondere bei erdverlegten Rohren von Bedeutung, die zum Transport eines flüssigen oder gasförmigen Mediums, beispielsweise als Abwasserrohr, eingesetzt werden. Derartige Rohre sind typischerweise aus Steinzeug gefertigt.

Es ist bekannt, zylindrische Manschetten als Kopplungselemente einzusetzen, die außen über die äußeren Enden der aneinandergelegten Rohre geschoben werden. Um eine ausreichende Dichtwirkung zu schaffen, muss die Manschette eng auf den äußeren Mantelflächen der Rohre aufliegen. Bei Aufschieben der Manschette auf die Rohrenden ist aufgrund der resultierenden Reibungskräfte eine erhebliche Kraft in Längsrichtung der Rohre aufzubringen. Ein gattungsbildendes Kopplungselement ist aus der DE 20 2012 004193 U1 bekannt.

Der Erfindung liegt die Aufgabe zugrunde, ein Kopplungselement zu schaffen, mit dem das Koppeln zweier aneinandergelegter Rohre vereinfacht ist und die Dichtwirkung verbessert ist.

Das erfindungsgemäße Kopplungselement ist definiert durch die Merkmale von Patentanspruch 1.

Demnach weist das Kopplungselement eine zylindrische Manschette mit einer zylindrischen Manschetteninnenfläche und einer an der Manschetteninnenfläche angeordneten umlaufenden expandierbaren Dichtung auf. Die expandierbare Dichtung weist eine an die Manschetteninnfläche angrenzende Dichtungsaußenfläche auf. Zudem weist die Dichtung eine zum Anliegen an eines der beiden Rohre ausgebildete Dichtungsinnenfläche auf. Die expandierbare Dichtung kann von einem Montagezustand, in dem die Dichtung nicht expandiert ist, in einen Dichtungszustand, in dem die Dichtung expandiert ist, überführt werden. Beim Überführen der Dichtung von dem Montagezustand in den Dichtungszustand wird der Abstand Δd in Radialrichtung zwischen der Dichtungsaußenfläche und der Dichtungsinnenfläche durch Aufbringen einer durch die Dichtungsinnenfläche wirkenden Expansionskraft vergrößert. Die Dichtungsaußenfläche wird dabei von der Manschetteninnenfläche gestützt. Dadurch kann die Dichtungsinnenfläche in dem Montagezustand über das erste Rohr geschoben werden, während die Dichtungsinnenfläche in dem expandierten Dichtungszustand gegen die äußere Rohrmantelfläche des ersten Rohres gepresst wird.

Die Dichtungsaußenfläche kann entsprechend der zylindrischen Dichtung ebenfalls zylindrisch ausgebildet sein. Entsprechendes gilt für die Dichtungsinnenfläche. Die Dichtungsaußenfläche und/oder die Dichtungsinnenfläche können jeweils am äußeren beziehungsweise inneren Ende einer abstehenden Dichtungslippe ausgebildet sein.

Der mittlere Durchmesser der zylindrischen Dichtungsinnenfläche beziehungsweise der mittlere Abstand in radialer Richtung vom Mittelpunkt der zylindrischen Manschette zur Dichtungsinnenfläche ist im Montagezustand vorzugsweise größer als der mittlere Durchmesser der äußeren Rohrmantelfläche beziehungsweise der mittlere Abstand vom Mittelpunkt der zylindrischen Manschette zur äußeren Rohrmantelfläche. Im Dichtungszustand ist der mittlere Durchmesser der Dichtungsinnenfläche vorzugsweise geringer als der mittlere Durchmesser der äußeren Rohrmantelfläche.

Die Expansionskraft kann auf verschiedene Arten erzeugt und auf die Dichtungsinnenfläche aufgebracht werden:
Die Expansionskraft kann als Druckkraft von der Dichtungsaußenfläche auf die Dichtungsinnenfläche wirken. Hierbei stützt sich die Druckkraft an der Dichtungsaußenfläche und der Manschette ab und drückt die Dichtungsinnenfläche nach innen gegen die äußere Rohrmantelfläche.

Beispielsweise kann die Expansionskraft in einem in der Dichtung zwischen der Dichtungsinnenfläche und der Dichtungsaußenfläche gebildeten Hohlraum erzeugt werden. Hierzu kann der Hohlraum mit einer Öffnung in der Dichtung verbunden sein, um ein fluides Medium durch die Öffnung in den Hohlraum einzubringen. Das fluide Medium, bei dem es sich beispielsweise um eine Flüssigkeit oder um ein Gas handeln kann, kann in den Hohlraum eingepresst werden. Die Öffnung kann mit einem Ventil verschlossen sein, um ein Rückströmen des Mediums aus dem Hohlraum heraus zu verhindern. Durch Einpressen des Mediums in den Hohlraum drückt das fluide Medium die Dichtungsinnenfläche nach innen und expandiert so die Dichtung. Alternativ oder ergänzend kann es sich bei dem Medium um ein expandierbares Medium handeln. Das expandierbare Medium kann ein Blähschaum sein, der in dem Hohlraum expandiert. Bei dem expandierbaren Medium kann es sich auch um ein komprimiertes Band aus einem Schaum-Material handeln, das durch Entspannen in der Hohlkammer expandiert und so die Expansionskraft erzeugt.

Alternativ oder ergänzend kann die Expansionskraft erzeugt werden, indem in dem Hohlraum eine Feder aktiviert wird, die die Dichtungsinnenfläche nach innen drückt. Bei der Feder kann es sich beispielsweise um eine Schlingfeder handeln, deren äußere Schenkel an der Manschette festgelegt sind. Durch Lösen der Schenkel gegenüber der Manschette wird die vorgespannte Feder freigegeben und kann sich entspannen und dabei die Dichtungsinnenfläche nach innen drücken.

Alternativ oder ergänzend kann es sich bei der Feder um eine Schlingfeder oder eine Spiralfeder handeln, die in dem Hohlraum angeordnet ist, der in dem Montagezustand evakuiert ist. Im evakuierten Zustand des Hohlraums drückt die Dichtungsinnenfläche die Feder entgegen der Federkraft nach außen. Nach Entfernen eines beispielsweise die Öffnung des Hohlraums verschließenden Schließelements wird Luft durch die Öffnung in den Hohlraum gesogen, der expandiert, so dass die Federkraft die Dichtungsinnenfläche nach innen drückt. Bei dem Schließelement kann es sich um ein Teil des nachstehend beschriebenen Indikators handeln.

Als Alternative oder ergänzend zu der als Druckkraft wirkenden Expansionskraft kann es sich bei der Expansionskraft um eine Zugkraft handeln, die von innerhalb der Dichtung auf die Dichtungsinnenfläche ausgeübt wird. Beispielsweise kann die Zugkraft zwischen der äußeren Rohrmantelfläche und der Dichtungsinnenfläche wirken. Hierbei ist eine Magnetkraft denkbar, die zwischen magnetischen Elementen auf Seiten des Rohres oder auf Seiten der Dichtung wirkt.

Erfindungsgemäß ist ein Indikator vorgesehen, der bei Aktivieren des Dichtungszustandes in einen Signalisierungszustand überführt wird, in dem der Indikator das Vorliegen des Dichtungszustands signalisiert. Bei dem Indikator kann es sich allgemein um einen optischen und/oder akustischen Indikator handeln. In einer erfindungsgemäßen Alternative ist der

Indikator ein die Öffnung des Hohlraums verschließendes Schließelement, beispielsweise in Form einer Kappe oder eines Stopfens. Im entfernten

Zustand signalisiert das entfernte Schließelement, dass der Dichtungszustand aktiviert ist. Beispielsweise kann das Schließelement eine Farbmarkierung freigeben, die den Dichtungszustand anzeigt.

In einer weiteren erfindungsgemäßen Alternative weist der Indikator ein entfernbares Sicherungselement auf, welches die Feder oder das Schließelement arretiert. Hierbei kann das Sicherungselement als Sicherungsstift ausgebildet sein. Nach Entfernen des Sicherungselements können beispielsweise die äußeren Schenkel der Feder freigegeben werden oder das Schließelement kann freigegeben werden. Bei dem Sicherungselement kann es sich auch um eine physikalische Trennung zweier Komponenten des Mediums in dem Hohlraum handeln. Die beiden Komponenten sind dabei so ausgewählt, dass sie bei Kontakt miteinander expandieren. Nach Entfernen des Sicherungselements vermischen sich die beiden Komponenten des Mediums in dem Hohlraum und expandieren, wodurch die Dichtungsinnenfläche nach innen gedrückt wird.

Gerade - aber nicht ausschließlich - bei erdverlegten Steinzeug-Rohren ist es von Vorteil, wenn ein erstes stirnseitiges Ende der Manschette fest mit der äußeren Rohrmantelfläche eines der beiden Rohre verbunden ist, während die Dichtung im Bereich des gegenüber liegenden stirnseitigen Endes angeordnet ist. Hierbei kann die feste Verbindung zwischen der Muffe und dem einen Rohr über einen zwischen der äußeren Rohrmantelfläche des Rohres und der Manschetteninnenfläche vorgesehenen Distanzring geschaffen werden.

Im Folgenden werden anhand der Fign. Ausführungsbeispiele der Erfindung näher erläutert. Es zeigen:
- Fig. 1: einen Schnitt durch ein erstes nicht erfindungsgemäßes Ausführungsbeispiel im Montagezustand,
- Fig. 2: ein Detail aus Fig. 1,
- Fig. 3: das erste nicht erfindungsgemäße Ausführungsbeispiel im Dichtungszustand,
- Fig. 4: ein Detail aus Fig. 3,
- Fig. 5: ein zweites nicht erfindungsgemäßes Ausführungsbeispiel im Montagezustand,
- Fig. 6: das Ausführungsbeispiel nach Fig. 5 im Dichtungszustand,
- Fig. 7: ein erfindungsgemäßes Ausführungsbeispiel im Montagezustand,
- Fig. 8: das Ausführungsbeispiel nach Fig. 7 im Dichtungszustand,
- Fig. 9: ein weiteres erfindungsgemäßes Ausführungsbeispiel im Montagezustand,
- Fig. 10: das Ausführungsbeispiel nach Fig. 9 im Dichtungszustand,
- Fig. 11: ein weiteres nicht erfindungsgemäßes Ausführungsbeispiel im Montagezustand,
- Fig. 12: das Ausführungsbeispiel nach Fig. 11 im Dichtungszustand,
- Fig. 13: ein weiteres nicht erfindungsgemäßes Ausführungsbeispiel im Montagezustand,
- Fig. 14: das Ausführungsbeispiel nach Fig. 13 im Dichtungszustand,
- Fig. 15: ein weiteres erfindungsgemäßes Ausführungsbeispiel im Montagezustand und

Fig. 16 das Ausführungsbeispiel nach Fig. 15 im Dichtungszustand.

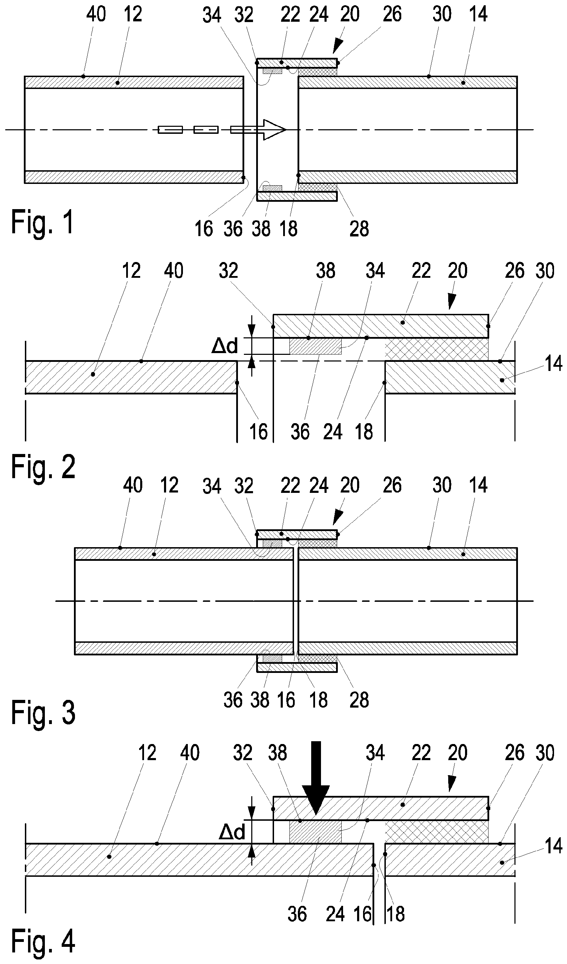

Das erste Ausführungsbeispiel ist den Figuren 1 bis 4 dargestellt. Zwei Rohre 12, 14 werden im Bereich ihrer stirnseitigen Enden 16, 18 aneinandergelegt. Ein Kopplungselement 20 dient zum Verbinden der beiden Rohre 12, 14 und weist hierzu eine zylindrische Manschette 22 auf. Die Manschette 22 hat eine zylindrische innenseitige Manschetteninnenfläche 24. Im Bereich ihres einen stirnseitigen Endes 26 ist die Manschette 22 an ihrer Manschetteninnenfläche 24 mit einem Distanzring 28 versehen. Der Distanzring 28 ist fest mit der Manschette 22 verbunden. Hierzu ist der Distanzring 28 auf das Ende 18 des Rohres 14 aufgeschoben und fest mit der Rohrmantelfläche 30 des Rohres 14 verbunden. Das Kopplungselement 20 ist somit Bestandteil des Rohres 14.

Im Bereich des dem Ende 26 gegenüberliegenden stirnseitigen Endes 32 ist die Manschetteninnenfläche 24 mit einer umlaufenden expandierbaren ringförmigen Dichtung 34 versehen. Die Dichtung 34 hat eine nach innen weisende zylindrische Dichtungsinnenfläche 36 und eine nach außen weisende zylindrische Dichtungsaußenfläche 38. Die Dichtungsaußenfläche 38 ist fest mit der Manschetteninnenfläche 24 verbunden.

In dem in Figur 1 dargestellten Montagezustand ist die Dichtung 34 nicht expandiert, sondern komprimiert und dabei ist der Durchmesser in Bezug auf die Dichtungsinnenfläche 36 größer als der Durchmesser in Bezug auf die Rohrmantelfläche 40 des ersten Rohres 12, mit dem die Verbindung herzustellen ist. Dadurch kann das Kopplungselement 20 auf das stirnseitige Ende 16 des Rohres 12 aufgeschoben werden, ohne dass Reibkräfte zu überwinden sind.

Die Figuren 3 und 4 zeigen den Dichtungszustand des Kopplungselements 20. In dem Dichtungszustand ist die Dichtung 34 expandiert. Das bedeutet, dass der Durchmesser in Bezug auf die Dichtungsinnenfläche 36 geringfügig geringer ist als der Durchmesser in Bezug auf die Rohrmantelfläche 40, so dass die Dichtung 34 von außen gegen die Rohrmantelfläche 40 gepresst wird. Dabei stützt sich die Dichtung 34 an der Manschetteninnenfläche 24 ab. Die Manschette 22 ist starr ausgebildet und kann die als Druckkraft ausgebildete Expansionskraft der Dichtung 34 aufnehmen.

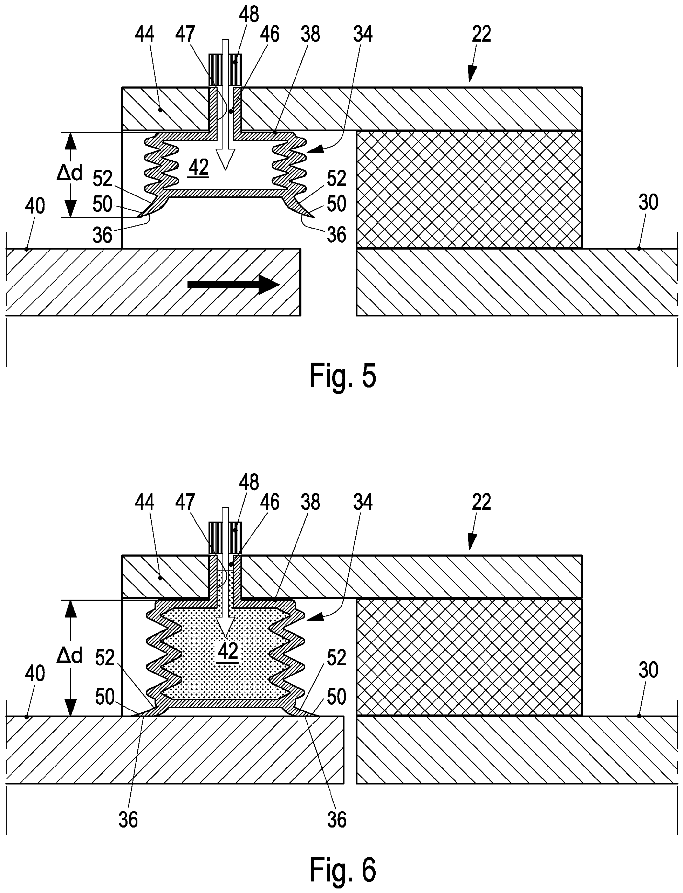

Das in den Figuren 5 und 6 dargestellte Ausführungsbeispiel unterscheidet sich von dem ersten Ausführungsbeispiel dadurch, dass es sich bei der Dichtung 34 um einen elastisch dehnbaren Hohlkörper handelt, der einen zwischen der Dichtungsinnenfläche 36 und der Dichtungsaußenfläche 38 ausgebildeten Hohlraum 42 aufweist. Die Dichtung 34 weist einen durch eine radial durch die Wand 44 der Manschette 22 vollständig durchgeschobenen zylindrischen Hohlfortsatz 46 auf, dessen Inneres mit dem Hohlraum 42 verbunden ist. Eine dem Hohlraum 42 gegenüberliegende Öffnung 47 des Hohlfortsatzes 46 ist mit einem Ventil 48 verschlossen, das in der in Figur 5 dargestellten Pfeilrichtung öffnet und in der entgegengesetzten Richtung sperrt. Dadurch kann der Hohlraum 42 über das Ventil 48 durch den Hohlfortsatz 46 hindurch mit einem Blähschaum gefüllt werden, der beim Expandieren die Dichtung 34 expandiert und gegen die Rohrmantelfläche 40 drückt. Die Dichtungsinnenflächen 36 sind in den in den Figuren 5 und 6 dargestellten Ausführungsbeispielen an den inneren Enden 50 zweier Dichtungslippen 52 ausgebildet.

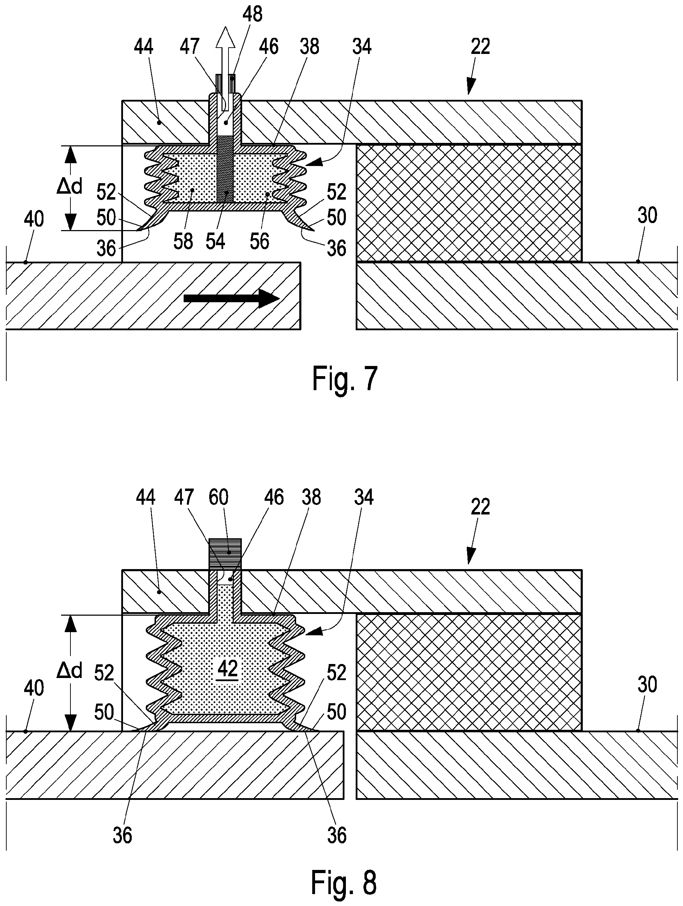

Das Ausführungsbeispiel der Figuren 7 und 8 unterscheidet sich von dem Ausführungsbeispiel der Figuren 5 und 6 dadurch, dass in den Hohlfortsatz 46 ein Sicherungselement 54 eingeschoben ist, das den Hohlraum 42 vollständig durchdringt und in zwei Teilbereiche 56, 58 unterteilt, in denen jeweils zwei Komponenten eines Blähschaums eingebracht sind, die von dem Sicherungselement 54 voneinander getrennt werden. In dem in Figur 7 dargestellten Montagezustand sind die beiden Komponenten voneinander getrennt und die Dichtung nicht im expandierten, sondern im komprimierten Zustand.

Figur 8 zeigt den Dichtungszustand, in dem das Sicherungselement 54 vollständig entfernt ist und die Öffnung 47 des Hohlfortsatzes 46 mit einem Schließelement 60 verschlossen ist. Die beiden Komponenten haben sich vermischt und bilden den Blähschaum, der sich bei Kontakt der beiden Komponenten ausdehnt und so die Dichtung 34 expandiert.

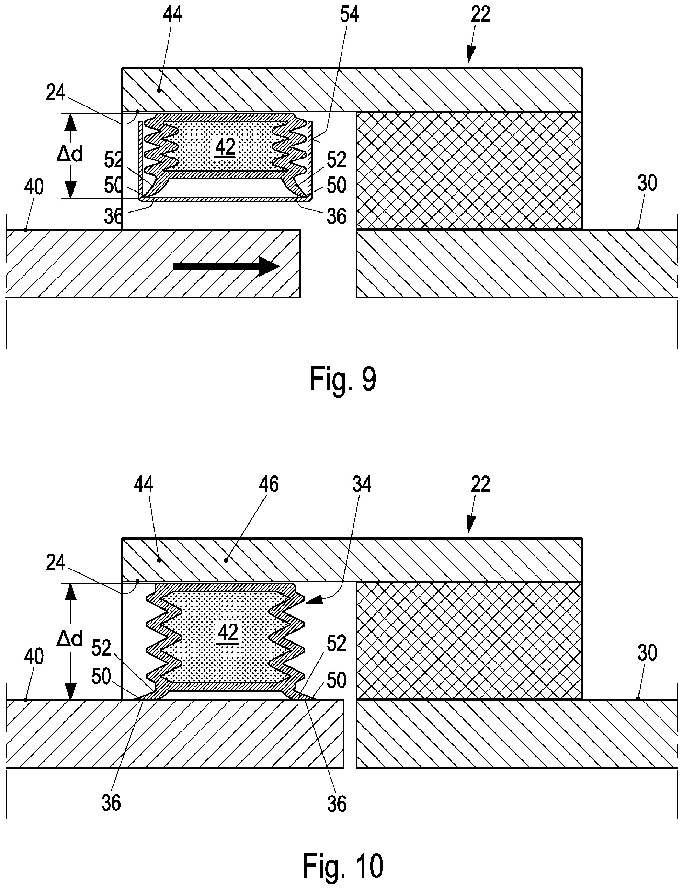

Das Ausführungsbeispiel der Figuren 9 und 10 unterscheidet sich von dem Ausführungsbeispiel in den Figuren 5 und 6 dadurch, dass kein Hohlfortsatz 46 vorgesehen ist. Der Hohlraum 42 bildet damit ein abgeschlossenes Volumen. Die Dichtung 34 wird in dem in Figur 9 dargestellten komprimierten Montagezustand von einem Sicherungselement 54 in Form einer die Dichtung an der Manschetteninnenfläche 24 haltenden Kappe gehalten. Nach Entfernen des Sicherungselements 54 expandiert die Dichtung und wird von einem in dem Hohlraum 42 enthaltenen Kompressionsband expandiert. Das Kompressionsband ist aus einem flexiblen, federnden Schaum-Material gebildet.

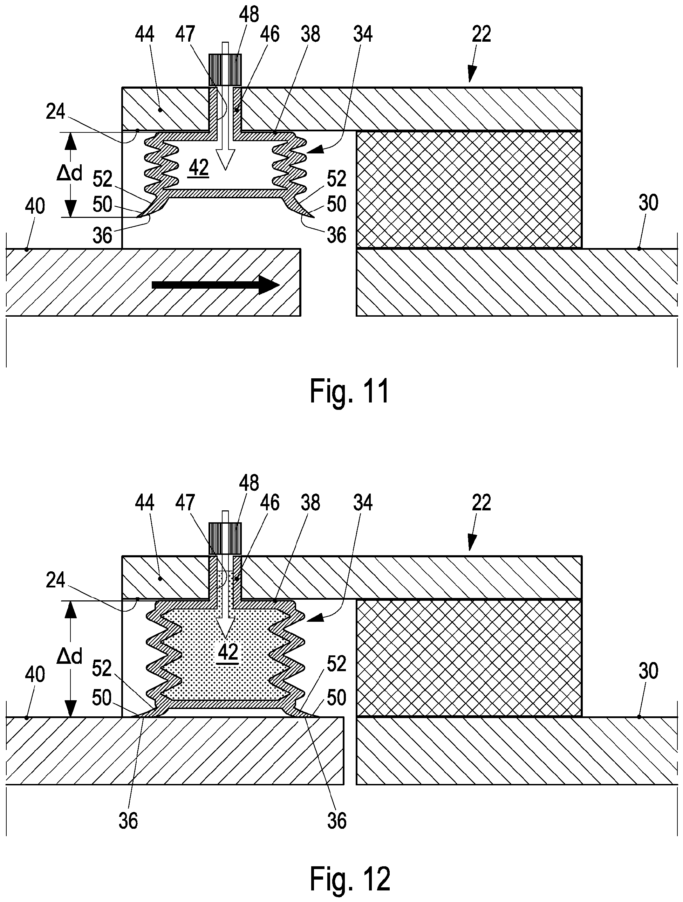

Das Ausführungsbeispiel der Figuren 11 und 12 unterscheidet sich von dem Ausführungsbespiel der Figuren 5 und 6 dadurch, dass in den Hohlraum 42 anstelle des Blähschaums ein Fluid, zum Beispiel ein Gas, eingebracht wird, um die Dichtung 34 zu expandieren.

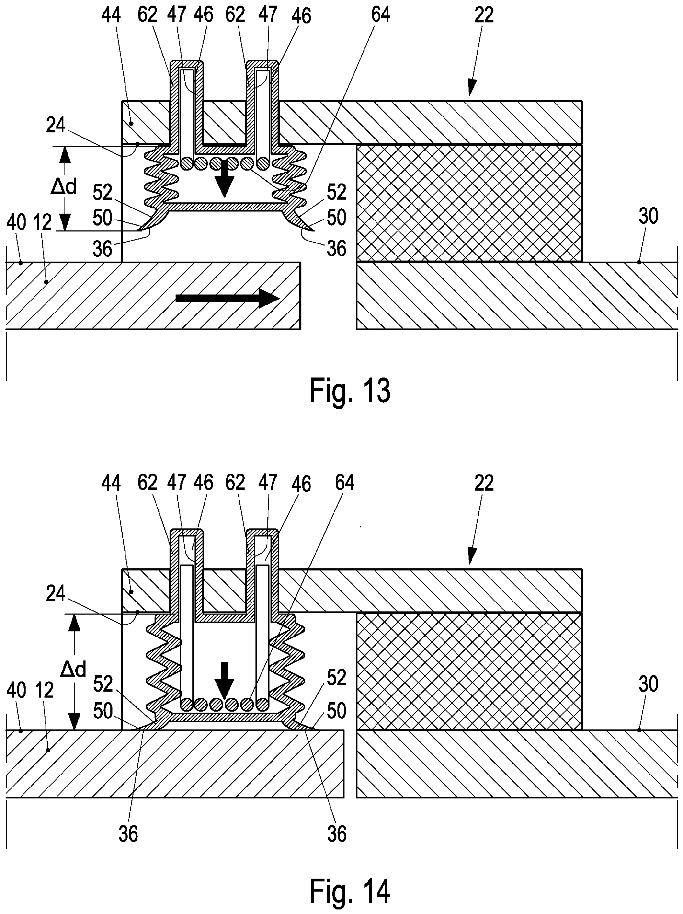

Das Ausführungsbeispiel der Figuren 13 und 14 unterscheidet sich von dem Ausführungsbeispiel der Figuren 11 und 12 durch zwei separate Hohlfortsätze, in denen die äußeren Schenkel 62 einer Schlingfeder 64 arretiert sind. Dadurch ist die Schlingfeder in einer verspannten Position gehalten. Durch äußeren Druck auf die Hohlfortsätze werden die Schenkel 62 aus den Hohlfortsätzen 46 und der damit verbundenen Arretierung herausgeschoben und die Arretierung gelöst. Die Feder 64 wird dadurch freigegeben und drückt diese gegen die Rohrmantelfläche 40. Der Vorteil der Feder 64 besteht in permanenten Rückstellkräften, die in dem Dichtungszustand auf das Rohr 12 ausgeübt werden.

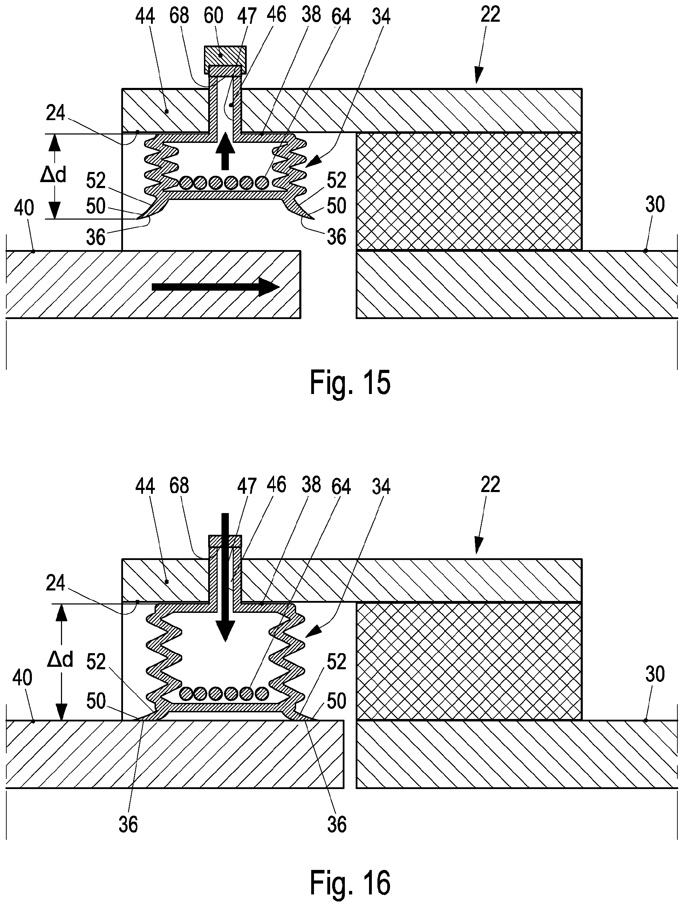

Das Ausführungsbeispiel der Figuren 15 und 16 unterscheidet sich von dem Ausführungsbeispiel der Figuren 11 und 12 dadurch, dass nur ein Hohlfortsatz 46 vorgesehen ist, dessen Öffnung 47 von einem Schließelement 60 in Form einer Kappe verschlossen ist. In dem Hohlraum 42 ist eine Schlingfeder oder Spiralfeder 64 angeordnet, deren Schenkel an der Manschette 22 arretiert sind. Nach Entfernen des Schließelements 60 wird der im Montagezustand gemäß Fig. 15 evakuierte Hohlraum 42 mit Luft aus der Umgebung befüllt, wodurch die vorgespannte Feder 64 freigegeben wird und sich entspannt und dabei die Dichtung 34 gegen die Rohrmantelfläche 40 presst. Die Schenkel 62 der Feder 64 sind in Fig. 15 nicht dargestellt, jedoch im Montagezustand arretiert. Diese Arretierung wird durch Einfüllen der Luft nach Entfernen des Schließelements 60 gefüllt. Unter der Kappe des Schließelements 60 ist ein mit einer Signalfarbe versehener Indikator 68 vorgesehen. Mit aufgesetztem Schließelement 60 gemäß Fig. 15 ist der Indikator 68 in dem Montagezustand nicht sichtbar. Erst nach Entfernen der Kappe des Schließelements 60 wird der Indikator 68 freigegeben und signalisiert in dem in Fig. 16 dargestellten Signalisierungszustand, dass sich die Dichtung in dem Dichtungszustand befindet.

## Patentansprüche

1. Kopplungselement (20) zum dichtenden Koppeln zweier aneinandergelegter Rohre (12, 14), mit einer zylindrischen Manschette (22) mit einer zylindrischen Manschetteninnenfläche (24) und einer an der Manschetteninnenfläche (24) angeordneten umlaufenden expandierbaren Dichtung (34), die eine an die Manschetteninnenflächen (24) angrenzende Dichtungsaußenfläche (38) und eine zum Anliegen an eines der Rohre (12, 14) ausgebildete Dichtungsinnenfläche (36) aufweist, wobei die Dichtung (34) dazu ausgebildet ist, dass der Abstand Δd in Radialrichtung zwischen der Dichtungsaußenfläche (38) und der Dichtungsinnenfläche (36) durch Aufbringen einer auf die Dichtungsinnenfläche (36) wirkenden Expansionskraft von einem Montagezustand zu einem Dichtungszustand vergrößerbar ist, während die Dichtungsaußenfläche (38) von der Manschetteninnenfläche (24) gestützt wird, um die Dichtungsinnenfläche (36) in dem Dichtungszustand gegen die äußere Rohrmantelfläche (40) eines ersten Rohres (12) zu pressen und in dem Montagezustand über das erste Rohr (12) zu schieben,
**dadurch gekennzeichnet,**
**dass** ein Indikator (68) vorgesehen ist, der bei Aktivieren des Dichtungszustands in einen Signalisierungszustand überführt wird, in dem der Indikator (68) das Vorliegen des Dichtungszustands signalisiert, wobei der Indikator (68) ein entfernbares Schließelement (60) oder ein entfernbares Sicherungselement (54) aufweist.

2. Kopplungselement (20) nach Anspruch 1, **dadurch gekennzeichnet, dass** die Expansionskraft als Druckkraft von der Dichtungsaußenfläche (38) auf die Dichtungsinnenfläche (36) wirkt.

3. Kopplungselement (20) nach Anspruch 2, **dadurch gekennzeichnet, dass** die Expansionskraft in einem in der Dichtung (34) zwischen der Dichtungsinnenfläche (36) und der Dichtungsaußenfläche (38) gebildeten Hohlraum (42) erzeugt wird.

4. Kopplungselement (20) nach Anspruch 3, **dadurch gekennzeichnet, dass** die Expansionskraft erzeugt wird, indem ein vorzugsweise fluides Medium durch eine mit dem Hohlraum (42) verbundene Öffnung (47) in den Hohlraum (42) eingebracht wird.

5. Kopplungselement (20) nach Anspruch 3 oder 4, **dadurch gekennzeichnet, dass** die Expansionskraft erzeugt wird, indem eine Feder (64) in dem Hohlraum (42) aktiviert wird.

6. Kopplungselement (20) nach Anspruch 3 oder 4, **dadurch gekennzeichnet, dass** die Expansionskraft erzeugt wird, indem ein expandierbares Medium in dem Hohlraum (42) zum Expandieren aktiviert wird.

7. Kopplungselement (20) nach Anspruch 1, **dadurch gekennzeichnet, dass** die Expansionskraft als Zugkraft von innerhalb der Dichtung (34) auf die Dichtungsinnenfläche (36) ausgeübt wird.

8. Kombination aus einem Kopplungselement (20) nach einem der vorhergehenden Ansprüche und einem zweiten Rohr (14), **dadurch gekennzeichnet, dass** die Dichtung im Bereich eines ersten stirnseitigen Endes (32) der Manschette (22) angeordnet ist, während das gegenüber liegende zweite stirnseitige Ende (26) fest mit der äußeren Rohrmantelfläche (40) des zweiten Rohres (14) verbunden ist.

9. Kombination nach Anspruch 8, **dadurch gekennzeichnet, dass** das zweite stirnseitige Ende (26) der Manschette (22) über einen im Bereich des zweiten stirnseitigen Endes (26) an der Manschetteninnenfläche (24) vorgesehenen Distanzring (28) mit der äußeren Rohrmantelfläche (40) des zweiten Rohres (14) verbunden ist

## Claims

1. A coupling element (20) for sealed coupling of two adjoining pipes (12, 14) with a cylindrical collar (22) having a cylindrical collar inner surface (24) and a circumferential expandable seal (34) arranged at the collar inner surface (24), said seal comprising a seal outer surface (38) adjacent to the collar inner surfaces (24) and a seal inner surface (36) configured to abut on one of the pipes (12, 14), wherein the seal (34) is configured such that the distance Δd in the radial direction between the seal outer surface (38) and the seal inner surface (36) is adapted to be increased from an installation condition to a sealing condition by applying an expansion force acting upon the seal inner surface (36), while the seal outer surface (38) is supported by the collar inner surface (24), for pressing the seal inner surface (36), in the sealing condition, against the outer pipe lateral surface (40) of a first pipe (12) and, in the installation condition, sliding it over the first pipe (12),
**characterized in that**
an indicator (68) is provided which, upon activation of the sealing condition, is transferred into a signaling condition in which the indicator (68) signals the sealing condition, wherein the indicator (68) comprises a removable closing element (60) or a removable securement element (54).

2. The coupling element (20) according to claim 1, **characterized in that** the expansion force acts as a pressure force from the seal outer surface (38) upon the seal inner surface (36).

3. The coupling element (20) according to claim 2, **characterized in that** the expansion force is generated in a cavity (42) provided in the seal (34) between the seal inner surface (36) and the seal outer surface (38).

4. The coupling element (20) according to claim 3, characterized that the expansion force is generated by introducing a preferably fluid medium into the cavity (42) through an opening (47) connected to the cavity (42).

5. The coupling element (20) according to claim 3 or 4, **characterized in that** the expansion force is generated by activating a spring (64) in the cavity (42).

6. The coupling element (20) according to claim 3 or 4, **characterized in that** the expansion force is generated by activating an expandable medium in the cavity (42) such that it expands.

7. The coupling element (20) according to claim 1, **characterized in that** the expansion force is exerted as a tensile force upon the seal inner surface (36) from inside the seal (34).

8. A combination of a coupling element (20) according to any one of the preceding claims and a second pipe (14), **characterized in that** the seal is arranged in the area of the first front-side end (32) of the collar (22), while the opposite second front-side end (26) is fixedly connected to the outer pipe lateral surface (40) of the second pipe (14).

9. The combination according to claim 8, **characterized in that** the second front-side end (26) of the collar (22) is connected to the outer pipe lateral surface (40) of the second pipe (14) via a spacer ring (28) provided at the collar inner surface (24) in the area of the second front-side end (26).

## Revendications

1. Elément de couplage (20) permettant de coupler de manière étanche deux tubes (12, 14) placés l'un contre l'autre, comprenant une manchette cylindrique (22) avec une surface intérieure cylindrique de manchette (24) et un joint d'étanchéité (34) expansible périphérique disposé sur la surface intérieure de manchette (24) et comportant une surface extérieure de joint (38) adjacente à la surface intérieure de manchette (24) et une surface intérieure de joint (36) configurée pour être adjacente à un des tubes (12, 14), le joint d'étanchéité (34) étant formé de façon que la distance Δd en direction radiale entre la surface extérieure de joint (38) et la surface intérieure de joint (36) puisse être agrandie à partir d'un état de montage à un état d'étanchéité par application d'une force d'expansion agissant sur la surface intérieure de joint (36), alors que la surface extérieure de joint (38) est supportée par la surface intérieure de manchette (24), afin de presser la surface intérieure de joint (36), en l'état d'étanchéité, contre la surface extérieure d'enveloppe tubulaire (40) d'un premier tube (12) et de la pousser, en l'état de montage, sur le premier tube (12),
**caractérisé en ce**
**qu'**il est prévu un indicateur (68) qui est fait passer, lors de l'activation de l'état d'étanchéité, dans un état de signalisation dans lequel l'indicateur (68) signalise le fait de l'état d'étanchéité, l'indicateur (68) comprenant un élément de fermeture (60) amovible ou un élément de sécurité (54) amovible.

2. Elément de couplage (20) selon la revendication 1, **caractérisé en ce que** la force d'expansion agit en tant que force de pression de la surface extérieure de joint (38) sur la surface intérieure de joint (36).

3. Elément de couplage (20) selon la revendication 2, **caractérisé en ce que** la force d'expansion est engendrée dans un espace creux (42) formé dans le joint d'étanchéité (34) entre la surface intérieure de joint (36) et la surface extérieure de joint (38).

4. Elément de couplage (20) selon la revendication 3, **caractérisé en ce que** la force d'expansion est engendrée en introduisant dans l'espace creux (42) un moyen, de préférence fluide, par une ouverture (47) reliée à l'espace creux (42).

5. Elément de couplage (20) selon la revendication 3 ou 4, **caractérisé en ce que** la force d'expansion est engendrée en activant un ressort (64) dans l'espace creux (42).

6. Elément de couplage (20) selon la revendication 3 ou 4, **caractérisé en ce que** la force d'expansion est engendrée en activant dans l'espace creux (42) un moyen expansible pour le faire expanser.

7. Elément de couplage (20) selon la revendication 1, **caractérisé en ce que** la force d'expansion est exercée comme force de traction agissant à partir de l'intérieur du joint d'étanchéité (34) sur la surface intérieure de joint (36).

8. Combinaison d'un élément de couplage (20) selon l'une des revendications précédentes et d'un deuxième tube (14), **caractérisé en ce que** le joint d'étanchéité est disposé dans la zone d'une première extrémité frontale (32) de la manchette (22), alors que la deuxième extrémité frontale (26), située à l'opposée, est fermement attachée à la surface extérieure d'enveloppe tubulaire (40) du deuxième tube (14).

9. Combinaison selon la revendication 8, **caractérisé en ce que** la deuxième extrémité frontale (26) de la manchette (22) est attachée à la surface extérieure d'enveloppe de tube (40) du deuxième tube (14) par une bague d'espacement (28) prévue sur la surface intérieure de manchette (24) dans la zone de la deuxième extrémité frontale (26).
